# FASCICULE DE BREVET EUROPEEN

(11) **EP 0 506 553 B1**
(45) Date de publication et mention de la délivrance du brevet: **20.09.1995**
(21) Numéro de dépôt: 92400804.8
(22) Date de dépôt: 25.03.1992
(51) Int. Cl.: G02F 1/1339

(54) **Procédé de dépôt de cales d'épaisseur pour cellule d'affichage à cristaux liquides**
Verfahren zum Aufbringen von Abstandshaltern für Flüssigkristallanzeigezelle
Spacer deposition method for liquid crystal display cell

(30) Priorité: 27.03.1991 FR 9103709
(43) Date de publication de la demande: 30.09.1992
(73) Titulaire: FRANCE TELECOM, 75015 Paris (FR)
(72) Inventeur: Vinouze, Bruno, F-22710 Port-Blanc (FR); Rolland, Alain, F-22450 Camlez (FR)
(74) Mandataire: Signore, Robert

(56) Documents cités:
- US-A- 4 971 829
- PATENT ABSTRACTS OF JAPAN vol. 11, no. 378 (P-645)(2825) 10 Décembre 1987 & JP-A-62 148 927
- PATENT ABSTRACTS OF JAPAN vol. 9, no. 312 (P-411)(2035) 7 Décembre 1985 & JP-A-60 142 325

## Description

La présente invention a pour objet un procédé de dépôt de cales d'épaisseur pour cellule d'affichage à cristaux liquides.

Les afficheurs à cristaux liquides sont constitués essentiellement d'une cellule comprenant deux plaques de verre dont l'une supporte des conducteurs transparents et des pixels et l'autre une contre-électrode. Ces deux plaques sont fixées à leur périphérie par un joint de colle. Entre ces plaques, de petites cales d'épaisseur sont disposées de façon à obtenir, après remplissage par un cristal liquide, l'épaisseur souhaitée de cristal (typiquement 5 à 10µm). Ces cales, appelées encore "espaceurs", sont habituellement des microfibres de verre (de longueur 10 à 100µm) ou des microbilles dont le diamètre définit l'épaisseur du cristal liquide.

Selon une technique connue, on pulvérise les cales sur l'une des plaques de la cellule. Pour cela, on introduit la plaque à traiter dans une enceinte, laquelle est équipée d'une buse reliée à un flacon hermétique contenant des espaceurs en suspension dans un solvant à bas point d'évaporation. Ce flacon est mis sous pression de gaz sec. Un jet de liquide contenant des espaceurs est ainsi formé. La buse atomise le jet en fines gouttelettes. Le solvant s'évapore et les espaceurs se déposent partout dans l'enceinte, donc sur la plaque. En jouant sur les paramètres de pulvérisation (pression, durée) et sur la concentration en espaceurs dans la solution, on peut régler la densité d'espaceurs déposés sur la plaque.

Cette technique connue présente des inconvénients. En effet, si l'agitation de la solution n'est pas assez efficace, ou si le jet n'est pas suffisamment pulvérisé par la buse, on observe un dépôt d'agglomérats de billes sur la plaque. Or, un paquet de billes se traduit par une tache blanche visible sur l'écran.

Par ailleurs, cette technique conduit à une répartition aléatoire des billes sur toute la plaque, ce qui peut être préjudiciable pour un écran à matrice active. En effet, un tel écran est constitué de pixels, de lignes et de colonnes d'adressage fournissant une tension vidéo et de transistors de commande des pixels, les lignes d'adressage constituant les grilles de ces transistors. Dès lors, les croisements entre lignes et colonnes, ainsi que les transistors, sont des zones particulièrement fragiles car un court-circuit entre conducteurs se traduit par l'apparition d'une colonne noire permanente sur l'écran. Par ailleurs, un transistor qui ne fonctionne pas rend le pixel toujours blanc. Or, certains espaceurs peuvent provoquer ce type de défauts lorsqu'ils ont été déposés sur un croisement ligne-colonne ou sur un transistor. On a observé, avec des fibres de verre comme cales d'épaisseur, que l'assemblage de la contre-électrode pouvait provoquer des courts-circuits par entraînement de l'aluminium de grille vers l'oxyde d'étain-indium de la colonne.

Il a été proposé de résoudre ce problème par une modification de la structure des plaques. Comme il est décrit dans le document FR-A-2 605 438, l'une au moins des plaques présente des zones en creux, qui, lorsque l'écran est monté, recouvrent au moins en partie les lignes et les colonnes d'adressage. L'écartement entre plaques, dans ces zones en creux, est ainsi supérieur à l'écartement entre plaques hors de ces zones. Les deux plaques sont en appui sur les seules billes situées hors des zones en creux et ces billes assurent l'écartement des plaques. Les billes situées dans les zones en creux reposent sur une seule des plaques et ne sont soumises à aucune contrainte de la part de l'autre plaque.

Bien que donnant satisfaction à certains égards, cette solution présente l'inconvénient de nécessiter une modification de la structure des plaques.

Le document Patent Abstracts of Japan, vol. 11, n°378 (P-645) (2825) décrit un procédé de réalisation de dispositifs d'affichage à matrice active à cristal liquide, dans lequel on dépose un film isolant sur l'ensemble des pixels, des lignes et des colonnes. On frotte ensuite ce film avec un tissu pour l'orienter et le charger électrostatiquement négativement. Puis on porte les lignes et les colonnes à un potentiel positif pour supprimer les charges négatives dudit film dans les zones correspondant à ces lignes et colonnes. Les espaceurs chargés positivement et pulvérisés sur l'ensemble, vont alors se trouver attirés par les charges négatives qui subsistent dans le film isolant au-dessus des seuls pixels.

Ce procédé présente l'inconvénient de nécessiter un film isolant et de requérir une opération de frottement.

Le document US-A-4 971 829 décrit un appareil pour pulvériser des espaceurs sur une électrode. Pour accélérer le processus de dépôt, on porte l'électrode à recouvrir à un potentiel opposé à la charge des espaceurs. L'attraction électrostatique vient se combiner à la gravitation pour accélérer le phénomène de dépôt. La pulvérisation obtenue est homogène et s'effectue sur la totalité d'une surface, ce qui ne convient pas à la réalisation de cellules à cristaux liquides, où l'on souhaite voir les espaceurs ne se déposer qu'au-dessus des pixels et non aux intersections des lignes et des colonnes où des risques de court-circuits sont toujours possibles.

La présente invention a justement pour but de remédier à ces inconvénients. A cette fin, elle propose un procédé très simple ne nécessitant aucune modification des plaques. Selon le procédé de l'invention, les espaceurs ne se déposent pas sur les croisements lignes-colonnes ni sur les transistors de commande mais essentiellement sur les pixels (et éventuellement sur les colonnes).

Ce but est atteint en effectuant une pulvérisation électrostatique qui permet d'obtenir des cales chargées électriquement avec une certaine polarité (par exemple positive) et en commandant la matrice active de telle sorte que les pixels soient portés à un potentiel de polarité opposée (par exemple négative). Les cales vont alors se déposer préférentiellement sur les pixels. Si, de plus, les lignes sont portées à un potentiel de même polarité que la polarité de la pulvérisation, les cales seront repoussées par ces lignes et ne s'y déposeront pas, et elles éviteront ainsi les croisements lignes-colonnes et les transistors.

De toute façon, les caractéristiques et avantages de l'invention apparaîtront mieux à la lumière de la description qui va suivre. Cette description porte sur des exemples de réalisation donnés à titre explicatif et nullement limitatif et elle se réfère à des dessins annexés sur lesquels :
- la figure 1 montre schématiquement un pixel, son transistor d'adressage ainsi que la ligne et la colonne associées,
- la figure 2 montre une machine de pulvérisation électrostatique pour la mise en oeuvre de l'invention.

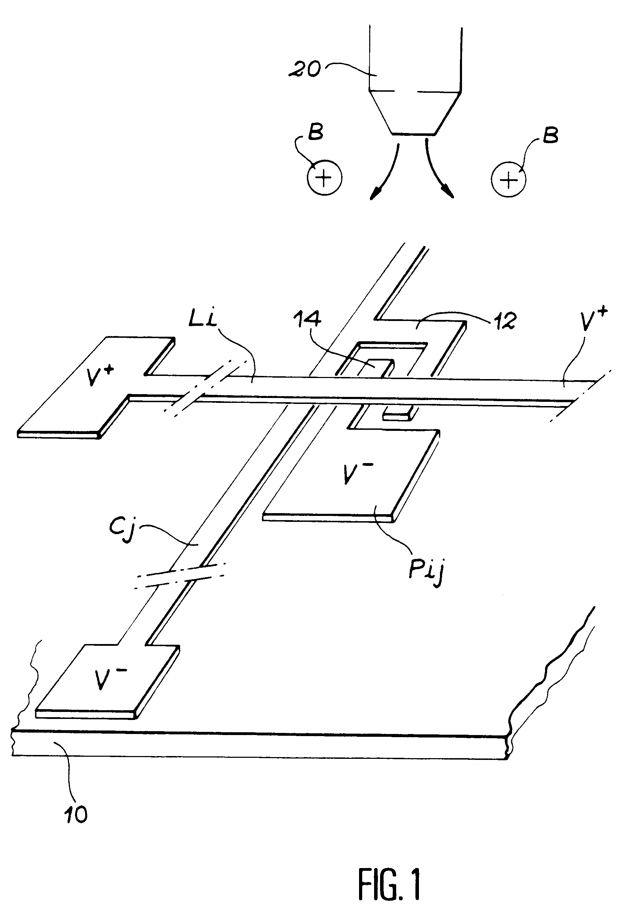

On voit sur la figure 1 une plaque transparente 10, par exemple en verre, supportant une matrice active dont seul un élément est représenté. Cet élément comprend une ligne d'adressage Li, une colonne d'adressage Cj et un pixel Pij. Un double transistor d'adressage est formé par un prolongement 12 de la colonne, par un appendice 14 du pixel, par la colonne Cj et la ligne Li, cette dernière servant de grille tandis que la colonne et son prolongement servent de drain et l'appendice du pixel de source. Le détail des couches utilisées n'est pas représenté, mais on sait que les couches conductrices sont en général en ITO (oxyde d'étain et d'indium), que les couches d'isolant sont en silice ou en nitrure de silicium, et que le semiconducteur peut être en aSi:H.

Pour avoir un potentiel négatif sur les pixels (si la pulvérisation utilise une haute tension positive), il suffit de débloquer les transistors d'adressage en appliquant une tension positive d'environ 10 volts sur les lignes. Ensuite, on polarise négativement (à -10 volts par exemple) les colonnes. Comme les transistors sont passants, le potentiel des colonnes est transféré vers les pixels. On trouve alors un potentiel positif sur les lignes et un potentiel négatif sur les colonnes et les pixels.

Les billes B chargées positivement et venant d'une buse de pulvérisation 20 sont attirées par les pixels et les colonnes chargées négativement et sont repoussées par les lignes chargées positivement. Aucune bille ne se dépose donc sur les croisements lignes-colonnes ou sur les transistors.

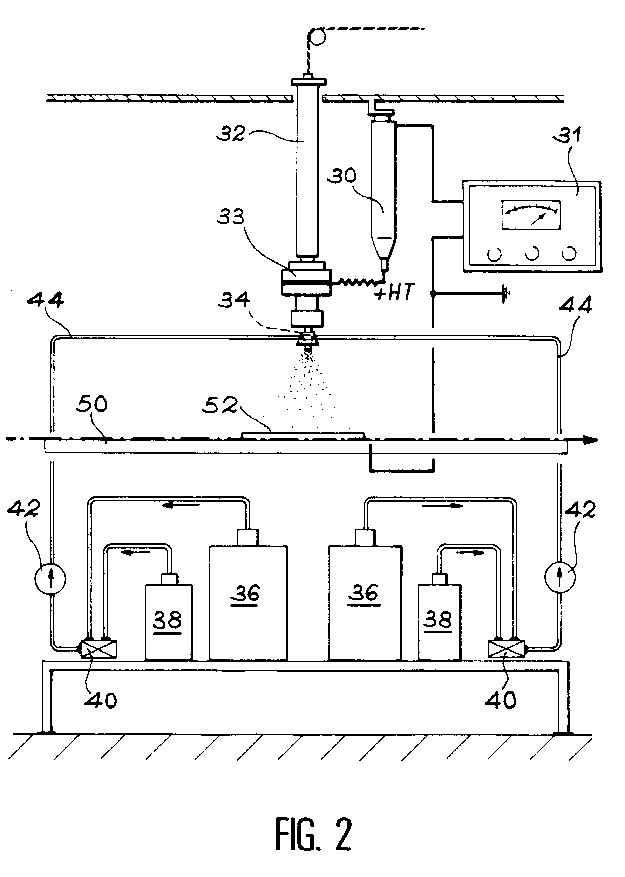

La figure 2 montre une machine de pulvérisation électrostatique permettant de mettre en oeuvre le procédé de l'invention.

Cette machine comprend : un générateur haute tension 30 par décharge CORONA, associé à une console haute tension 31 pour la commande et la mesure de la tension, un injecteur 32, une turbine 33 tournant à grande vitesse (70 000t/min), un atomiseur 34, des récipients 36 contenant un mélange de solvant et de cales d'épaisseur, des récipients 38 de solvant pur, deux pneumovannes 40, deux pompes 42, et enfin des conduits 44 d'alimentation de la buse 34.

Face à la buse se trouve un plateau 50 sur lequel se déplace les plaques 52 à traiter. La distance buse-plateau est réglable.

Cette machine peut être une adaptation de machines du commerce, comme la machine modèle S21 ou ME350 de la Société suisse KEMILING, ou comme la machine modèle 1360 de la Société suisse CIPOSA MICROTEC.

Pour être correctement chargées électrostatiquement, les cales doivent être très isolantes. C'est le cas avec les microfibres de silice ou avec les microbilles de divinylbenzène commercialisées sous le nom de Micropearl SP par la Société japonaise SEKISUI CHEMICAL CO, (résistivité supérieure à 10¹⁴Ω·cm).

La solution de pulvérisation de billes peut être composée de 0,1% de billes mélangées à du trichloro 112-trifluoro-122 éthanol (proportions en poids) avec agitation par ultrasons.

De préférence, on établit dans l'enceinte de pulvérisation une atmosphère de faible hygrométrie, afin d'assurer un bon maintien des charges de surface sur les billes ou fibres pendant la pulvérisation, c'est-à-dire pendant une vingtaine de secondes.

Le fait de charger les espaceurs au même potentiel entraîne que ceux-ci se repoussent mutuellement. En conséquence, l'atomisation du jet de solvant contenant les espaceurs est plus efficace : il ne peut plus y avoir d'agglomérats d'espaceurs sur la plaque.

## Revendications

1. Procédé de dépôt de cales d'épaisseur sur une plaque de cellule d'affichage à cristaux liquides, cette plaque contenant des lignes (Li) et des colonnes (Cj) d'adressage et des pixels (Pij), ce procédé consistant à pulvériser à proximité de la plaque une suspension contenant lesdites cales, et étant caractérisé par le fait qu'on effectue une pulvérisation électrostatique sous haute tension ayant une certaine polarité et en ce qu'on met sous tension les lignes (Li) et les colonnes (Cj) d'adressage pendant l'opération de pulvérisation pour porter les pixels (Pij) à un potentiel de polarité opposée à la polarité de la haute tension de pulvérisation.

2. Procédé selon la revendication 1, caractérisé par le fait qu'on utilise comme cales des microfibres.

3. Procédé selon la revendication 2, caractérisé par le fait que ces microfibres sont en silice.

4. Procédé selon la revendication 1, caractérisé par le fait qu'on utilise comme cales des microbilles.

5. Procédé selon la revendication 4, caractérisé par le fait que ces microbilles sont en divinylbenzène.

## Patentansprüche

1. Verfahren zum Aufbringen von Distanzscheiben auf eine Platte einer Flüssigkristallanzeigezelle, wobei diese Platte Zeilen (Li) und Spalten (Cj) zur Adressierung und Pixel (Pij) enthält und dieses Verfahren darin besteht, in der Nähe der Platte eine Suspension, die die genannten Distanzscheiben enthält, zu zerstäuben, dadurch gekennzeichnet, daß eine elektrostatische Zerstäubung unter Hochspannung mit einer bestimmten Polarität erfolgt und daß die Zeilen (Li) und Spalten (Cj) zur Adressierung während des Zerstäubungsvorgangs unter Spannung gesetzt werden, um den Pixeln (Pij) ein Potential zu verleihen, dessen Polarität entgegengesetzt zur Polarität der Zerstäubungshochspannung ist.

2. Verfahren nach Anspruch 1, dadurch gekennzeichnet, daß als Distanzscheiben Mikrofasern verwendet werden.

3. Verfahren nach Anspruch 2, dadurch gekennzeichnet, daß die Mikrofasern aus Silizium bestehen.

4. Verfahren nach Anspruch 1, dadurch gekennzeichnet, daß als Distanzscheiben Kügelchen verwendet werden.

5. Verfahren nach Anspruch 4, dadurch gekennzeichnet, daß die Kügelchen aus Divinylbenzen bestehen.

## Claims

1. Process for the deposition of shims on a liquid crystal display cell plate, said plate containing addressing rows (Li) and columns (Cj) and pixels (Pij), said process consisting of sputtering, in the vicinity of the plate, a suspension containing the said shims, characterized in that an electrostatic sputtering takes place under high voltage with a certain polarity and in that the addressing rows (Li) and columns (Cj) are made live during the sputtering operation in order to raise the pixels (Pij) to a potential with an opposite polarity to the high voltage sputtering polarity.

2. Process according to claim 1, characterized in that microfibres are used as shims.

3. Process according to claim 2, characterized in that the microfibres are of silica.

4. Process according to claim 1, characterized in that microspheres are used as shims.

5. Process according to claim 4, characterized in that the microspheres are of divinyl benzene.
